# EUROPEAN PATENT APPLICATION

(11) **EP 4 814 796 A1**
(43) Date of publication of application: **30.09.2026**
(21) Application number: 26167112.7
(22) Date of filing: 24.03.2026
(51) Int. Cl.: G06N 3/048, G05B 13/02, G06N 3/004, G06N 3/006, G06N 3/045

(54) **SYSTEMS AND METHODS FOR ATTENTION COMPUTATION IN QUANTIZED TRANSFORMER MODELS**

(30) Priority: 28.03.2025 US 202563780060 P; 14.07.2025 US 202519268269
(71) Applicant: Tesla, Inc., Austin, TX 78725 (US)
(72) Inventor: RAWAT, Ritvik, Austin, Texas, 78725 (US); SAMPATHKUMAR, Srihari, Austin, Texas, 78725 (US)
(74) Representative: Liesegang, Eva

(57) **Abstract**

Disclosed herein are methods and systems for a navigation paradigm. One method includes receiving a set of quantized values resulting from a matrix multiplication of quantized query and key vectors, the set of quantized values corresponding to sensor data associated with the ego; identifying a maximum value using an integer comparison operation; for at least one quantized value in the set of quantized values, computing a difference between the quantized value and the maximum value; executing a bit shift operation, on the difference between the quantized value and the maximum value, corresponding to a power-of-two quantization scale to generate bit-shifted values; executing a base-2 exponentiation operation to the bit shifted values to generate base-2 exponentiated values; aggregating the base-2 exponentiated values to generate an aggregated value; and executing a model using the aggregated value to output a navigational instruction to be executed by the ego.

## Description

### CROSS REFERENCE TO RELATED APPLICATIONS

The present application claims priority to U.S. Provisional Patent Application No. 63/780,060, filed March 28, 2025, which is incorporated herein by reference in its entirety for all purposes.

### TECHNICAL FIELD

The present application relates to performing efficient attention computations in quantized transformer models, including optimized softmax operations suitable for deployment on edge computing platforms used in autonomous navigation and other real-time applications.

### BACKGROUND

Autonomous navigation technology used for autonomous vehicles and robots (sometimes referred to as "egos") has advanced with computer technology. These advances allow for safer and more reliable autonomous navigation of egos. Autonomous navigation systems are increasingly adopting transformer models due to their ability to process complex, multi-modal data and capture long-range dependencies within sequential inputs. Unlike traditional convolutional or recurrent neural networks, transformers can simultaneously attend to spatial and temporal features across high-dimensional inputs. This capability enables more accurate perception, trajectory prediction, and decision-making in dynamic environments. Moreover, the transformer model's scalability and attention-based architecture make them well-suited for integrating contextual information that can be incorporated into autonomous navigation decisions.

However, deploying transformer models in real-time (or near-real-time) autonomous navigation systems presents significant computational challenges, particularly when such systems operate on edge computing platforms with limited processing power and energy resources. The attention mechanism, which is a core component of transformer models, requires intensive matrix operations and subsequent normalization using the softmax function. In practice, this step can involve computing exponentials and performing floating-point arithmetic that can be prohibitively expensive on embedded hardware lacking dedicated floating-point units or optimized support for transcendental functions.

### SUMMARY

Although quantization techniques have been introduced to improve runtime efficiency and reduce memory usage by converting model parameters and activations to lower-precision formats, the softmax computation remains a computational bottleneck that creates undue requirements for computational resources. Conventional implementations of softmax require de-quantizing intermediate values to perform floating-point exponentiation and normalization, thereby negating many of the performance benefits gained through quantization. Additionally, to ensure numerical stability and preserve model accuracy, some solutions can introduce clamping functions such as ReLU6 or bounded clamps (clamp layers), which restrict the dynamic range of activation values. These functions, however, are not aligned with hardware-efficient operations and often require additional multiplications or divisions during de-quantization.

Existing and conventional approaches to mitigate these inefficiencies, such as replacing the exponential function with base 2 exponentiation, offer limited hardware compatibility or require specialized instructions not universally available on all platforms. As a result, current transformer implementations in autonomous navigation systems struggle to maintain real-time (or near-real-time) responsiveness without sacrificing model fidelity or significantly increasing energy consumption.

Accordingly, there is a need for a more efficient method of performing attention normalization in quantized transformer models that is tailored for deployment on edge computing platforms. Such a method should minimize reliance on floating-point operations, enable efficient scaling using integer-friendly instructions, and preserve the accuracy of the attention mechanism necessary for safe and reliable autonomous navigation.

The optimized base-2 softmax scheme disclosed herein consistently enhances both training and inference workflows of a machine learning model (e.g., a model that uses a transformer) by substituting traditional exponentiation and division with hardware-friendly bit-shifts, table look-ups, and a single normalization pass, thereby delivering reductions in latency and energy consumption while preserving numerical fidelity. The methods and systems discussed herein provide decreases in computational overhead and memory traffic, yielding faster throughput and lower power draw on edge-class processors.

In some embodiments, the methods and systems discussed herein provide an optimized "base-2 softmax" pipeline that replaces the floating-point exponentials and divisions traditionally used to normalize attention scores in transformer models with a sequence of integer-only operations: (i) constraining the query-key accumulator so its quantization scale is to the power of two, (ii) shifting each score by that scale instead of de-quantizing with a multiply, (iii) converting the shifted integers to weights via a single base-2 exponentiation instruction such as exp2/fscale, (iv) summing those weights with narrow-word integer adds, and/or (v) normalizing by multiplying each weight with an integer reciprocal of the sum. Because every arithmetic step after the matrix multiply stays in the fixed-point domain, the methods and systems discussed herein reduce latency, memory traffic, and energy while delivering numerically similar probabilities, enabling faster (sometimes real-time) transformer inference.

In some embodiments, the techniques described herein relate to a method of navigating an ego via ingesting sensor data, the method including: receiving, by one or more processors, a set of quantized values resulting from a matrix multiplication of quantized query and key vectors in an attention layer of a transformer model, the set of quantized values corresponding to sensor data associated with the ego; identifying, by the one or more processors, from the set of quantized values, a maximum value using an integer comparison operation; for at least one quantized value in the set of quantized values, computing, by the one or more processors, a difference between the quantized value and the maximum value; executing, by the one or more processors, a bit shift operation, on the difference between the quantized value and the maximum value, corresponding to a power-of-two quantization scale to generate bit-shifted values; executing, by the one or more processors, a base-2 exponentiation operation to the bit shifted values to generate base-2 exponentiated values; aggregating, by the one or more processors, the base-2 exponentiated values to generate an aggregated value; executing, by the one or more processors, a model using the aggregated value to output a navigational instruction to be executed by the ego.

In some embodiments, the techniques described herein relate to a method, wherein executing the model further includes estimating, by the one or more processors, a time-to-location or time-to-contact for at least one dynamic object detected in camera imagery associated with the ego, and the navigational instruction directs an evasive steering or braking maneuver when the estimated time-to-location or time-to-contact satisfies a threshold.

In some embodiments, the techniques described herein relate to a method, wherein the power-of-two quantization scale is chosen so that at least one bit-shifted value falls within a defined range.

In some embodiments, the techniques described herein relate to a method, wherein the navigational instruction includes an ego control command including at least one of a steering-angle adjustment, a lane-change initiation, a longitudinal acceleration or deceleration, and a target velocity set-point.

In some embodiments, the techniques described herein relate to a method, wherein the sensor data corresponds to two-dimensional image data captured by at least one camera associated with the ego.

In some embodiments, the techniques described herein relate to a method, further including: normalizing, by the one or more processors, the set of quantized values using the aggregated value; and executing, by the one or more processors, a model using the aggregated normalized value to output a navigational instruction to be executed by the ego.

In some embodiments, the techniques described herein relate to a method, wherein normalizing includes dividing each of the base-2 exponentiated values by the aggregated value to produce a probability distribution over the set of quantized values.

In some embodiments, the techniques described herein relate to a computer system for navigating an ego via ingesting sensor data, the computer system including a computer readable medium having a set of non-transitory instructions, that when executed by at least one processor, cause the at least one processor to: receive a set of quantized values resulting from a matrix multiplication of quantized query and key vectors in an attention layer of a transformer model, the set of quantized values corresponding to sensor data associated with the ego; identify from the set of quantized values, a maximum value using an integer comparison operation; for at least one quantized value in the set of quantized values, compute a difference between the quantized value and the maximum value; execute a bit shift operation, on the difference between the quantized value and the maximum value, corresponding to a power-of-two quantization scale to generate bit-shifted values; execute a base-2 exponentiation operation to the bit shifted values to generate base-2 exponentiated values; aggregate the base-2 exponentiated values to generate an aggregated value; execute a model using the aggregated value to output a navigational instruction to be executed by the ego.

In some embodiments, the techniques described herein relate to a computer system, wherein executing the model further includes estimating a time-to-location for at least one dynamic object detected in camera imagery associated with the ego, and the navigational instruction directs an evasive steering or braking maneuver when the estimated time-to-location satisfies a threshold.

In some embodiments, the techniques described herein relate to a computer system, wherein the power-of-two quantization scale is chosen so that at least one bit-shifted value falls within a defined range.

In some embodiments, the techniques described herein relate to a computer system, wherein the navigational instruction includes an ego control command including at least one of a steering-angle adjustment, a lane-change initiation, a longitudinal acceleration or deceleration, and a target velocity set-point.

In some embodiments, the techniques described herein relate to a computer system, wherein the sensor data corresponds to two-dimensional image data captured by at least one camera associated with the ego.

In some embodiments, the techniques described herein relate to a computer system, wherein the instructions further cause the at least one processor to: normalize the set of quantized values using the aggregated value; and execute a model using the aggregated normalized value to output a navigational instruction to be executed by the ego.

In some embodiments, the techniques described herein relate to a computer system, wherein normalizing includes dividing each of the base-2 exponentiated values by the aggregated value to produce a probability distribution over the set of quantized values.

In some embodiments, the techniques described herein relate to a computer system for navigating an ego via ingesting sensor data, the computer system including at least one processor configured to: receive a set of quantized values resulting from a matrix multiplication of quantized query and key vectors in an attention layer of a transformer model, the set of quantized values corresponding to sensor data associated with the ego; identify from the set of quantized values, a maximum value using an integer comparison operation; for at least one quantized value in the set of quantized values, compute a difference between the quantized value and the maximum value; execute a bit shift operation, on the difference between the quantized value and the maximum value, corresponding to a power-of-two quantization scale to generate bit-shifted values; execute a base-2 exponentiation operation to the bit shifted values to generate base-2 exponentiated values; aggregate the base-2 exponentiated values to generate an aggregated value; execute a model using the aggregated value to output a navigational instruction to be executed by the ego.

In some embodiments, the techniques described herein relate to a computer system, wherein executing the model further includes estimating a time-to-location for at least one dynamic object detected in camera imagery associated with the ego, and the navigational instruction directs an evasive steering or braking maneuver when the estimated time-to-location satisfies a threshold.

In some embodiments, the techniques described herein relate to a computer system, wherein the power-of-two quantization scale is chosen so that at least one bit-shifted value falls within a defined range.

In some embodiments, the techniques described herein relate to a computer system, wherein the navigational instruction includes an ego control command including at least one of a steering-angle adjustment, a lane-change initiation, a longitudinal acceleration or deceleration, and a target velocity set-point.

In some embodiments, the techniques described herein relate to a computer system, wherein the sensor data corresponds to two-dimensional image data captured by at least one camera associated with the ego.

In some embodiments, the techniques described herein relate to a computer system, wherein the at least one processor is further configured to: normalize the set of quantized values using the aggregated value; and execute a model using the aggregated normalized value to output a navigational instruction to be executed by the ego.

### BRIEF DESCRIPTION OF THE DRAWINGS

Non-limiting embodiments of the present disclosure are described by way of example concerning the accompanying figures, which are schematic and are not intended to be drawn to scale. Unless indicated as representing the background art, the figures represent aspects of the disclosure.
**FIG. 1A** illustrates components of a quantization system for egos, according to embodiments.
**FIG. 1B** illustrates various sensors associated with vehicle (or other type of ego), according to embodiments.
**FIG. 1C** illustrates the components of an ego, according to embodiments.
**FIG. 2** illustrates a flow diagram executed in a quantization system, according to embodiments.
**FIG. 3** illustrates a visualization of a quantization performed using the methods and systems discussed herein, according to embodiments.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one skilled in the relevant art and having possession of this disclosure, are to be considered within the scope of the subject matter disclosed herein. Other embodiments may be used and/or other changes may be made without departing from the spirit or scope of the present disclosure. The illustrative embodiments described in the detailed description are not meant to be limiting to the subject matter presented.

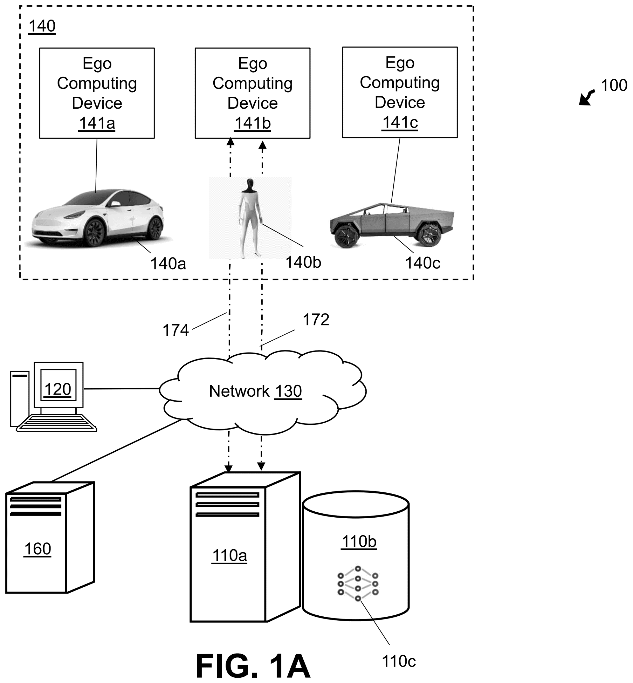

**FIG. 1A** is a non-limiting example of components of a system in which the methods and systems discussed herein can be implemented. **FIG. 1A** illustrates components of an AI-enabled visual data analysis system **100.** The system **100** may include an analytics server **110a**, a system database **110b**, an administrator computing device **120,** egos **140a-b** (collectively ego(s) **140),** ego computing devices **141a-c** (collectively ego computing devices **141),** and a server **160.** The system **100** is not confined to the components described herein and may include additional or other components not shown for brevity, which are to be considered within the scope of the embodiments described herein.

The above-mentioned components may be connected through a network **130.** Examples of the network **130** may include, but are not limited to, private or public LAN, WLAN, MAN, WAN, and the Internet. The network **130** may include wired and/or wireless communications according to one or more standards and/or via one or more transport mediums.

The communication over the network **130** may be performed in accordance with various communication protocols such as Transmission Control Protocol and Internet Protocol (TCP/IP), User Datagram Protocol (UDP), and IEEE communication protocols. In examples, the network **130** may include wireless communications according to Bluetooth specification sets or another standard or proprietary wireless communication protocol. In another example, the network **130** may also include communications over a cellular network, including, for example, a GSM (Global System for Mobile Communications), CDMA (Code Division Multiple Access), or an EDGE (Enhanced Data for Global Evolution) network.

The system **100** illustrates an example of a system architecture and components that can be used to train and execute one or more AI models, such the AI model(s) **110c.** Specifically, as depicted in **FIG. 1A** and described herein, the analytics server **110a** can execute the AI model(s) **110c** using data retrieved from the egos **140** (e.g., by using data streams **172** and **176)** to make navigational decisions. When the AI model(s) **110c** have been trained, each of the egos **140** may have access to and execute the trained AI model(s) **110c**. For instance, the vehicle **140a** having the ego computing device **141a** may transmit its camera feed to the trained AI model(s) **110c** and may determine the occupancy status of its surroundings (e.g., data stream **174).** Moreover, the data ingested and/or predicted by the AI model(s) **110c** with respect to the egos **140** (at inference time) may also be used to improve the AI model(s) **110c**. Therefore, the system **100** depicts a continuous loop that can periodically improve the accuracy of the AI model(s) **110c.** Moreover, the system **100** depicts a loop in which data received the egos **140** can be used to at training phase in addition to the inference phase.

The analytics server **110a** may be configured to collect, process, and analyze navigation data (e.g., images captured while navigating) and various sensor data collected from the egos **140.** The collected data may then be processed and prepared into a training dataset. The training dataset may then be used to train one or more AI models, such as the AI model **110c.** The analytics server **110a** may also be configured to collect visual data from the egos **140.** Using the AI model **110c** (trained using the methods and systems discussed herein), the analytics server **110a** may generate navigational decisions for the egos **140.**

**In** **FIG. 1A****,** the AI model **110c** is illustrated as a component of the system database **110b,** but the AI model **110c** may be stored in a different or a separate component, such as cloud storage or any other data repository accessible to the analytics server **110a.**

The analytics server **110a** may also be configured to display an electronic platform illustrating various training attributes for training the AI model **110c.** The electronic platform may be displayed on the administrator computing device **120,** such that an analyst can monitor the training of the AI model **110c.** An example of the electronic platform generated and hosted by the analytics server **110a** may be a web-based application or a website configured to display the training dataset collected from the egos **140** and/or training status/metrics of the AI model **110c.**

The analytics server **110a** may be any computing device comprising a processor and non-transitory machine-readable storage capable of executing the various tasks and processes described herein. Non-limiting examples of such computing devices may include workstation computers, laptop computers, server computers, and the like. While the system **100** includes a single analytics server **110a,** the system **100** may include any number of computing devices operating in a distributed computing environment, such as a cloud environment.

The egos **140** may represent various electronic data sources that transmit data associated with their previous or current navigation sessions to the analytics server **110a.** The egos **140** may be any apparatus configured for navigation, such as a vehicle **140a** and/or a truck **140c.** The egos **140** are not limited to being vehicles and may include robotic devices as well. For instance, the egos **140** may include a robot **140b,** which may represent a general purpose, bipedal, autonomous humanoid robot capable of navigating various terrains. The robot **140b** may be equipped with software that enables balance, navigation, perception, or interaction with the physical world. The robot **140b** may also include various cameras configured to transmit visual data to the analytics server **110a.**

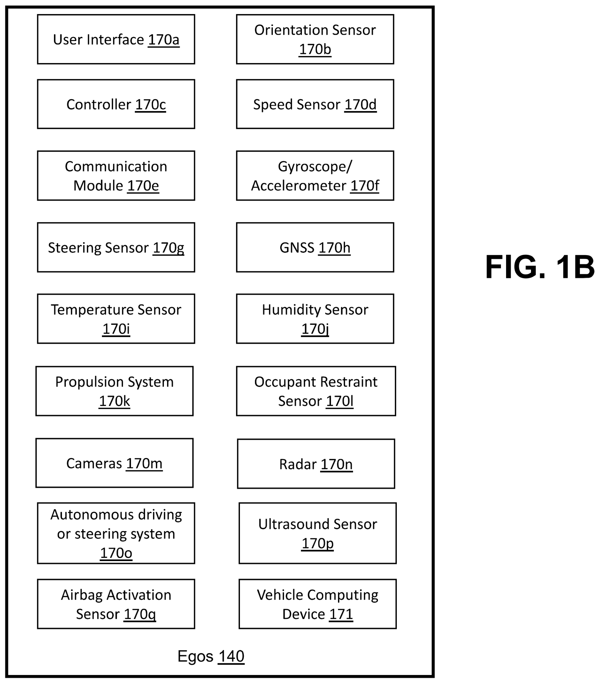

Even though referred to herein as an "ego," the egos **140** may or may not be autonomous devices configured for automatic navigation. For instance, in some embodiments, the ego **140** may be controlled by a human operator or by a remote processor. The ego **140** may include various sensors, such as the sensors depicted in **FIG. 1B****.** The sensors may be configured to collect data as the egos **140** navigate various terrains (e.g., roads). The analytics server **110a** may collect data provided by the egos **140.** For instance, the analytics server **110a** may obtain navigation session and/or road/terrain data (e.g., images of the egos **140** navigating roads) from various sensors, such that the collected data is eventually used by the AI model **110c** for training purposes.

As used herein, a navigation session corresponds to a trip where egos **140** travel a route, regardless of whether the trip was autonomous or controlled by a human. In some embodiments, the navigation session may be for data collection and model training purposes. However, in some other embodiments, the egos **140** may refer to a vehicle purchased, rented, leased, etc. by a consumer and the purpose of the trip may be categorized as everyday use. The navigation session may start when the egos **140** move from a non-moving position beyond a threshold distance (e.g., 0.1 miles, 100 feet) or exceed a threshold speed (e.g., over 0 mph, over 1 mph, over 5 mph). The navigation session may end when the egos **140** are returned to a non-moving position and/or are turned off (e.g., when a driver exits a vehicle).

The egos **140** may represent a collection of egos monitored by the analytics server **110a** to train the AI model(s) **110c.** For instance, a driver for the vehicle **140a** may authorize the analytics server **110a** to monitor data associated with their respective vehicle. As a result, the analytics server **110a** may utilize various methods discussed herein to collect sensor/camera data and generate a training dataset to train the AI model(s) **110c** accordingly. The analytics server **110a** may then apply the trained AI model(s) **110c** to analyze data associated with the egos **140** and to predict a navigational decision. Moreover, additional/ongoing data associated with the egos **140** can also be processed and added to the training dataset, such that the analytics server **110a** re-calibrates the AI model(s) **110c** accordingly. Therefore, the system **100** depicts a loop in which navigation data received from the egos **140** can be used to train the AI model(s) **110c.** The egos **140** may include processors that execute the trained AI model(s) **110c** for navigational purposes. While navigating, the egos **140** can collect additional data regarding their navigation sessions, and the additional data can be used to calibrate the AI model(s) **110c.** That is, the egos **140** represent egos that can be used to train, execute/use, and re-calibrate the AI model(s) **110c.** In a non-limiting example, the egos **140** represent vehicles purchased by customers that can use the AI model(s) **110c** to autonomously navigate while simultaneously improving the AI model(s) **110c.**

The egos **140** may be equipped with various technology allowing the egos to collect data from their surroundings and (possibly) navigate autonomously. For instance, the egos **140** may be equipped with inference chips to run self-driving software.

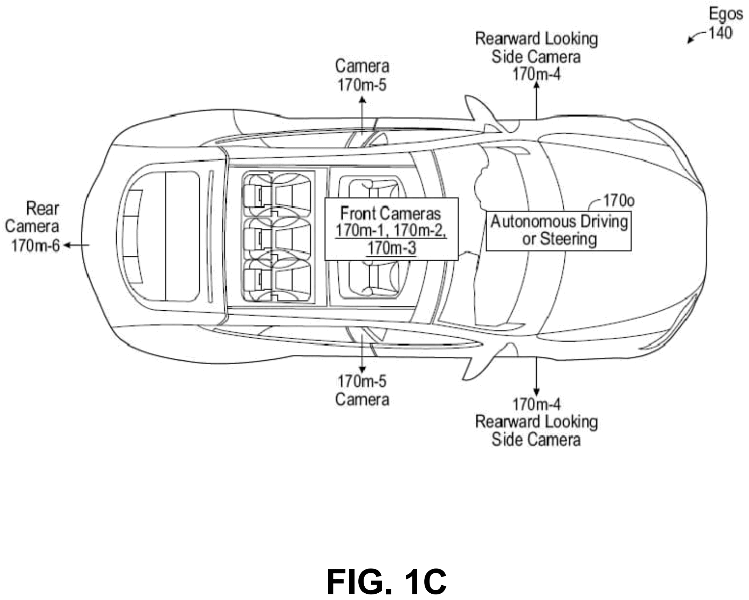

Various sensors for each ego **140** may monitor and transmit the collected data associated with different navigation sessions to the analytics server **110a.** **FIGS. 1B-C** illustrate block diagrams of sensors integrated within the egos **140,** according to embodiments. The number and position of each sensor discussed with respect to **FIGS. 1B-C** may depend on the type of ego discussed in **FIG. 1A****.** For instance, the robot **140b** may include different sensors than the vehicle **140a** or the truck **140c.** For instance, the robot **140b** may not include the airbag activation sensor **170q.** Moreover, the sensors of the vehicle **140a** and the truck **140c** may be positioned differently than illustrated in **FIG. 1C****.**

As discussed herein, various sensors integrated within each ego **140** may be configured to measure various data associated with each navigation session. The analytics server **110a** may periodically collect data monitored and collected by these sensors, wherein the data is processed in accordance with the methods described herein and used to train the AI model **110c** and/or execute the AI model **110c** to generate the occupancy map.

The egos **140** may include a user interface **170a.** The user interface **170a** may refer to a user interface of an ego computing device (e.g., the ego computing devices **141** in **FIG. 1A****).** The user interface **170a** may be implemented as a display screen integrated with or coupled to the interior of a vehicle, a heads-up display, a touchscreen, or the like. The user interface **170a** may include an input device, such as a touchscreen, knobs, buttons, a keyboard, a mouse, a gesture sensor, a steering wheel, or the like. In various embodiments, the user interface **170a** may be adapted to provide user input (e.g., as a type of signal and/or sensor information) to other devices or sensors of the egos **140** (e.g., sensors illustrated in **FIG. 1B****),** such as a controller **170c.**

The user interface **170a** may also be implemented with one or more logic devices that may be adapted to execute instructions, such as software instructions, implementing any of the various processes and/or methods described herein. For example, the user interface **170a** may be adapted to form communication links, transmit and/or receive communications (e.g., sensor signals, control signals, sensor information, user input, and/or other information), or perform various other processes and/or methods. In another example, the driver may use the user interface **170a** to control the temperature of the egos **140** or activate its features (e.g., autonomous driving or steering system **1700**). Therefore, the user interface **170a** may monitor and collect driving session data in conjunction with other sensors described herein. The user interface **170a** may also be configured to display various data generated/predicted by the analytics server **110a** and/or the AI model **110c.**

An orientation sensor **170b** may be implemented as one or more of a compass, float, accelerometer, and/or other digital or analog device capable of measuring the orientation of the egos **140** (e.g., magnitude and direction of roll, pitch, and/or yaw, relative to one or more reference orientations such as gravity and/or magnetic north). The orientation sensor **170b** may be adapted to provide heading measurements for the egos **140.** In other embodiments, the orientation sensor **170b** may be adapted to provide roll, pitch, and/or yaw rates for the egos **140** using a time series of orientation measurements. The orientation sensor **170b** may be positioned and/or adapted to make orientation measurements in relation to a particular coordinate frame of the egos **140.**

A controller **170c** may be implemented as any appropriate logic device (e.g., processing device, microcontroller, processor, application-specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of the egos **140.** Such software instructions may also implement methods for processing sensor signals, determining sensor information, providing user feedback (e.g., through user interface **170a**), querying devices for operational parameters, selecting operational parameters for devices, or performing any of the various operations described herein.

A communication module **170e** may be implemented as any wired and/or wireless interface configured to communicate sensor data, configuration data, parameters, and/or other data and/or signals to any feature shown in **FIG. 1A** (e.g., analytics server **110a**). As described herein, in some embodiments, communication module **170e** may be implemented in a distributed manner such that portions of communication module **170e** are implemented within one or more elements and sensors shown in **FIG. 1B****.** In some embodiments, the communication module **170e** may delay communicating sensor data. For instance, when the egos **140** do not have network connectivity, the communication module **170e** may store sensor data within temporary data storage and transmit the sensor data when the egos **140** are identified as having proper network connectivity.

A speed sensor **170d** may be implemented as an electronic pitot tube, metered gear or wheel, water speed sensor, wind speed sensor, wind velocity sensor (e.g., direction and magnitude), and/or other devices capable of measuring or determining a linear speed of the egos **140** (e.g., in a surrounding medium and/or aligned with a longitudinal axis of the egos **140)** and providing such measurements as sensor signals that may be communicated to various devices.

A gyroscope/accelerometer **170f** may be implemented as one or more electronic sextants, semiconductor devices, integrated chips, accelerometer sensors, or other systems or devices capable of measuring angular velocities/accelerations and/or linear accelerations (e.g., direction and magnitude) of the egos **140,** and providing such measurements as sensor signals that may be communicated to other devices, such as the analytics server **110a.** The gyroscope/accelerometer **170f** may be positioned and/or adapted to make such measurements in relation to a particular coordinate frame of the egos **140.** In various embodiments, the gyroscope/accelerometer **170f** may be implemented in a common housing and/or module with other elements depicted in **FIG. 1B** to ensure a common reference frame or a known transformation between reference frames.

A global navigation satellite system (GNSS) **170h** may be implemented as a global positioning satellite receiver and/or another device capable of determining absolute and/or relative positions of the egos **140** based on wireless signals received from space-born and/or terrestrial sources, for example, and capable of providing such measurements as sensor signals that may be communicated to various devices. In some embodiments, the GNSS **170h** may be adapted to determine the velocity, speed, and/or yaw rate of the egos **140** (e.g., using a time series of position measurements), such as an absolute velocity and/or a yaw component of an angular velocity of the egos **140.**

A temperature sensor **170i** may be implemented as a thermistor, electrical sensor, electrical thermometer, and/or other devices capable of measuring temperatures associated with the egos **140** and providing such measurements as sensor signals. The temperature sensor **170i** may be configured to measure an environmental temperature associated with the egos **140,** such as a cockpit or dash temperature, for example, which may be used to estimate a temperature of one or more elements of the egos **140.**

A humidity sensor **170j** may be implemented as a relative humidity sensor, electrical sensor, electrical relative humidity sensor, and/or another device capable of measuring a relative humidity associated with the egos **140** and providing such measurements as sensor signals.

A steering sensor **170g** may be adapted to physically adjust a heading of the egos **140** according to one or more control signals and/or user inputs provided by a logic device, such as controller **170c.** Steering sensor **170g** may include one or more actuators and control surfaces (e.g., a rudder or other type of steering or trim mechanism) of the egos **140** and may be adapted to physically adjust the control surfaces to a variety of positive and/or negative steering angles/positions. The steering sensor **170g** may also be adapted to sense a current steering angle/position of such steering mechanism and provide such measurements.

A propulsion system **170k** may be implemented as a propeller, turbine, or other thrust-based propulsion system, a mechanical wheeled and/or tracked propulsion system, a wind/sail-based propulsion system, and/or other types of propulsion systems that can be used to provide motive force to the egos **140.** The propulsion system **170k** may also monitor the direction of the motive force and/or thrust of the egos **140** relative to a coordinate frame of reference of the egos **140.** In some embodiments, the propulsion system **170k** may be coupled to and/or integrated with the steering sensor **170g.**

An occupant restraint sensor **170l** may monitor seatbelt detection and locking/unlocking assemblies, as well as other passenger restraint subsystems. The occupant restraint sensor **170l** may include various environmental and/or status sensors, actuators, and/or other devices facilitating the operation of safety mechanisms associated with the operation of the egos **140.** For example, occupant restraint sensor **170l** may be configured to receive motion and/or status data from other sensors depicted in **FIG. 1B****.** The occupant restraint sensor **170l** may determine whether safety measurements (e.g., seatbelts) are being used.

Cameras **170m** may refer to one or more cameras integrated within the egos **140** and may include multiple cameras integrated (or retrofitted) into the ego **140,** as depicted in **FIG. 1C****.** The cameras **170m** may be interior- or exterior-facing cameras of the egos **140.** For instance, as depicted in **FIG. 1C****,** the egos **140** may include one or more interior-facing cameras **170m-1.** These cameras may monitor and collect footage of the occupants of the egos **140.** The egos **140** may also include a forward-looking side camera **170m-2,** a camera **170m-3** (e.g., integrated within the door frame), and a rearward-looking side camera **170m-4.**

In some embodiments, the methods and systems discussed herein can operate exclusively with 2D sensors (e.g., 2D cameras) that may explicitly exclude depth cameras, time-of-flight (ToF) sensors, and other specialized depth-sensing technologies. The AI model and processing pipelines discussed herein can be trained to extract spatial and environmental information solely from monocular or stereo 2D image inputs without relying on depth estimation hardware. This ensures compatibility with 2D camera systems that only transmit captured images without any additional depth data, while maintaining robust performance in autonomous navigation and visual data analysis.

Referring to **FIG. 1B****,** a radar **170n** and ultrasound sensors **170p** may be configured to monitor the distance of the egos **140** to other objects, such as other vehicles or immobile objects (e.g., trees or garage doors). The radar **170n** and the ultrasound sensors **170p** may be integrated into the egos **140** as depicted in **FIG. 1C****.** The egos **140** may also include an autonomous driving or steering system **170o** configured to use data collected via various sensors (e.g., radar **170n**, speed sensor **170d,** and/or ultrasound sensors **170p**) to autonomously navigate the ego **140.**

Therefore, autonomous driving or steering system **170o** may analyze various data collected by one or more sensors described herein to identify driving data. For instance, autonomous driving or steering system **170o** may calculate a risk of forward contact based on the speed of the ego **140** and its distance to another vehicle on the road. The autonomous driving or steering system **170o** may also determine whether the driver is touching the steering wheel. The autonomous driving or steering system **1700** may transmit the analyzed data to various features discussed herein, such as the analytics server.

An airbag activation sensor **170q** may anticipate or detect a contact and cause the activation or deployment of one or more airbags. The airbag activation sensor **170q** may transmit data regarding the deployment of an airbag, including data associated with the event causing the deployment.

Referring back to **FIG. 1A****,** the administrator computing device **120** may represent a computing device operated by a system administrator. The administrator computing device **120** may be configured to display data retrieved or generated by the analytics server **110a** (e.g., various analytic metrics and risk scores), wherein the system administrator can monitor various models utilized by the analytics server **110a,** review feedback, and/or facilitate the training of the AI model(s) **110c** maintained by the analytics server **110a.**

The ego(s) **140** may be any device configured to navigate various routes, such as the vehicle **140a** or the robot **140b.** As discussed with respect to **FIGS. 1B-C** , the ego **140** may include various telemetry sensors. The egos **140** may also include ego computing devices **141.** Specifically, each ego may have its own ego computing device **141.** For instance, the truck **140c** may have the ego computing device **141c.** For brevity, the ego computing devices are collectively referred to as the ego computing device(s) **141.** The ego computing devices **141** may control the presentation of content on an infotainment system of the egos **140,** process commands associated with the infotainment system, aggregate sensor data, manage communication of data to an electronic data source, receive updates, and/or transmit messages. In one configuration, the ego computing device **141** communicates with an electronic control unit. In another configuration, the ego computing device **141** is an electronic control unit. The ego computing devices **141** may comprise a processor and a non-transitory machine-readable storage medium capable of performing the various tasks and processes described herein. For example, the AI model(s) **110c** described herein may be stored and performed (or directly accessed) by the ego computing devices **141.** Non-limiting examples of the ego computing devices **141** may include a vehicle multimedia and/or display system.

In operation, the one or more egos **140** may collect image data from their cameras and transmit the image data to the processor (placed locally on the one or more egos **140**) and/or the analytics server **110a,** as depicted in the data stream **172.** The processor may then execute the AI model(s) **110c** to predict navigational decisions for the one or more egos **140.**

In transformer architectures deployed for edge inference, one of the primary techniques employed to improve computational efficiency (both in terms of power consumption and performance) is quantization. Quantization of weights and activations reduces the memory footprint on embedded devices and allows such models to leverage low-power integer-based compute cores, such as 8-bit (int8) arithmetic units that are common in embedded accelerators. However, training quantized models is typically more complex than training floating-point models. To facilitate efficient quantization, activation functions are often constrained or clamped within a narrower range that is more amenable to quantization. For example, multi-head attention modules in quantized transformers commonly incorporate clamping operations such as ReLU6 or other bounded activation functions to limit the dynamic range of activation outputs.

A computational component of transformer models is the attention mechanism, in which query key matrix multiplication is followed by the application of a softmax function. The result of the query key multiplication is typically accumulated in a high bit-width accumulator (e.g., 32-bit integers when multiplying int8 operands). To compute the softmax function from these accumulator outputs, conventional methods involve multiple passes and rely heavily on floating-point arithmetic, as illustrated below:

### First Pass (Maximum Extraction)

Each input value x from the accumulator is converted from integer to floating-point (i2f) and dequantized by multiplying with the quantization scales associated with the query and key projections (scale_q and scale_k). The maximum value across the elements is then computed using floating-point comparisons.

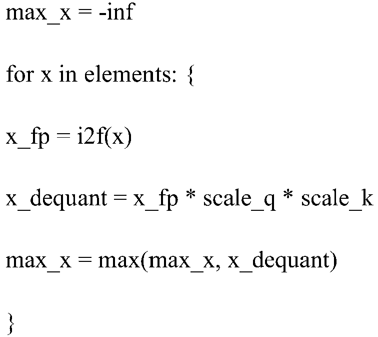

### Second Pass (Exponentiation and Accumulation)

Each element is again converted to floating point, dequantized, shifted relative to the previously computed maximum, and exponentiated. The exponentiated values are then accumulated to compute the normalization denominator.

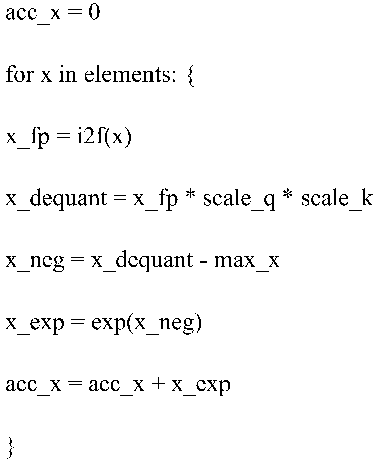

### Third Pass (Normalization and Output)

The reciprocal of the accumulated value is computed and used to normalize each exponentiated element. The final softmax output is stored.

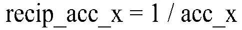

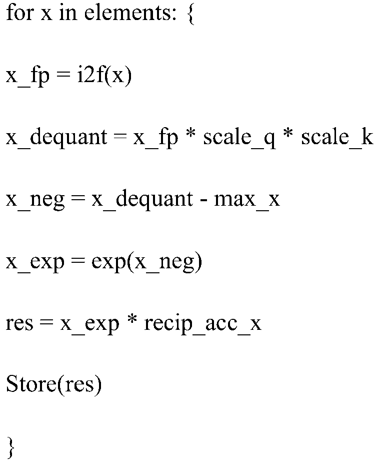

These conventional approaches to computing softmax are inefficient for edge hardware due to their reliance on multiple floating-point conversions, multiplications, and exponential operations. Even the most optimized approximations of the exponential function typically require several floating-point operations, all of which are computationally expensive on embedded processors.

To address this inefficiency, modifications to the underlying neural network architecture can be made to better align the computation with hardware-accelerated instructions. In particular, by enforcing that the quantization scales for the query and key projections are powers of two, the clamping operations can also be adjusted to bounded power-of-two values such as ReLU4, ReLU8, clamp (-4, 4), or clamp (-8, 8). This results in activation values that remain within a quantization-friendly range and allows dequantization to be implemented as a simple bit shift operation in the integer domain rather than a costly floating-point multiplication.

Moreover, since the goal of softmax may be to convert logits into normalized probability scores, a modified implementation can utilize base-2 exponentiation (e.g., computing 2^{x} rather than e^{x}) which is more amenable to efficient hardware instructions such as fscale. Because the dequantized inputs are still representable in integer form after scaling, these inputs can be directly processed using base-2 exponentiation techniques, enabling a more streamlined and instruction-efficient implementation of the softmax operation for quantized transformer models.

This optimization results in a fused multi-head attention kernel that significantly reduces the number of required instructions and avoids costly floating-point operations, making it particularly well-suited for real-time inference on edge devices.

In accordance with conventional attention mechanisms implemented in quantized transformer models, the softmax function following query key multiplication is typically computed using multiple passes, each involving floating-point arithmetic. These operations include floating-point conversions, multiplications, additions, and exponential evaluations, which are computationally intensive and power-inefficient, particularly on edge computing platforms where floating-point resources are limited or absent.

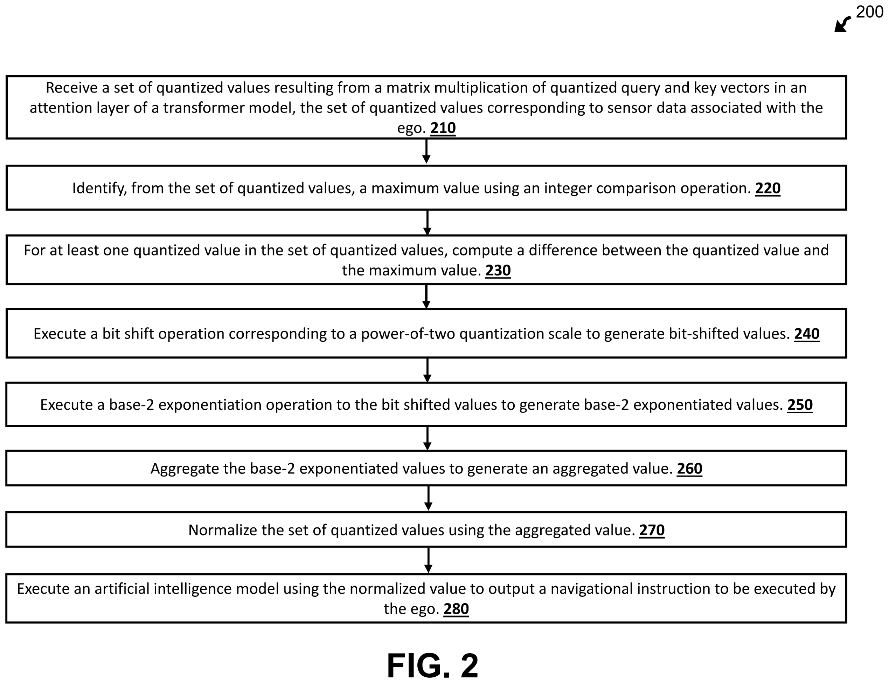

**FIG. 2** illustrates a flow diagram of a method **200** executed in a quantization system, according to embodiments. The method **200** may include steps **210-280.** However, other embodiments may include additional or alternative steps or may omit one or more steps altogether. The method **200** is described as being executed by an analytics server (e.g., a computer similar to the analytics server **110a**). However, one or more steps of the method **200** may be executed by any number of computing devices operating in the distributed computing system described in **FIGS. 1A** and **1B** (e.g., a processor of the egos **140** and/or egos computing device **141).** For instance, one or more computing devices may locally perform some or all of the steps described in **FIG. 2****.**

Reference will now be made to illustrative embodiments regarding base-2 softmax techniques, and specific language will be used to describe the same. It will be understood that no limitation of the scope of the claims or disclosure is thereby intended. Alterations and further modifications of the described features illustrated herein, and additional applications of the principles of the subject matter, which would occur to one skilled in the relevant art, are to be considered within the scope of the subject matter disclosed herein.

The optimized base-2 softmax operation described herein exhibits a data-agnostic nature, allowing it to be applied universally across model layers without reliance on data-specific attributes. This allows the optimized softmax to yield uniform speed-ups across both training and inference workloads, providing performance enhancements regardless of the underlying data characteristics. By transforming traditional exponential and division operations into efficient bit-shifts, look-ups, and normalization step(s), the method **200** can provide consistent numerical accuracy across diverse input distributions. In doing so, execution of the method **200** may reduce computational latency and power consumption, making the process particularly suitable for deployment across a variety of applications, including but not limited to edge computing platforms and real-time systems (e.g., autonomous navigation systems that require fast decision making based on the ever-changing conditions of their surroundings).

The methods and systems discussed herein (e.g., method **200)** leverage power-of-two scaling factors that facilitate bit-shift operations in lieu of floating-point multiplications, thereby. As a result, the techniques not only preserve numerical stability and model fidelity but also supports a broad spectrum of model architectures and data types. This data-agnostic approach allows integration into current processing pipelines, improving computational efficiency and enabling widespread applicability across distinct technological environments and systems where transformer models are employed.

At step **210,** the analytics server may receive a set of quantized values resulting from a matrix multiplication of quantized query and key vectors in an attention layer of a transformer model, the set of quantized values corresponding to sensor data associated with the ego. In some embodiments, the analytics server may function as the host compute node that executes a transformer's attention kernel for real-time (or near-real time) perception. For instance, the analytics server may be a processor that is locally executing on an ego and/or in communication with the sensors (e.g., two dimensional cameras) of the ego. In some embodiments, successive frames of sensor data (e.g., camera imagery) may be ingested, where the data is first embedded and quantized to an 8-bit integer representation. Inside the attention layer, the analytics server/model may perform an integer matrix-multiplication between the quantized query (Q) vectors that represent the current focus of the model and the quantized key (K) vectors that encode contextual information from the same or neighboring frames.

For instance, in one illustrative embodiment, a forward-facing camera mounted on an ego captures an image frame that is divided into a plurality of fixed-size regions (e.g., 256 tiles). A lightweight quantization stage converts each region into a short integer vector. The analytics server then computes integer similarity scores between every pair of regions, thereby producing a square matrix of whole-number values that reflects how strongly each region relates to every other region. This matrix of integer similarity scores constitutes the "set of quantized values" that is passed, without any intermediate conversion to floating-point format, into the base-2 softmax procedure described herein.

At step **220,** the analytics server may identify from the set of quantized values, a maximum value using an integer comparison operation. In some embodiments, after the analytics server iteratively compares pairs of integer values to discover the single largest value in the set. In some embodiments, because the values may remain in fixed-point integer format throughout this operation, the comparison can be performed with low-latency SIMD "max" instructions without any conversion to the floating point. The result of the reduction may establish a reference level against which every other value can be subsequently offset, thereby bounding the dynamic range of the downstream base-2 exponentiation.

At step **230,** the analytics server may, for at least one quantized value in the set of quantized values, compute a difference between the quantized value and the maximum value. Upon obtaining the integer-domain maximum, the analytics server may iterate over each remaining quantized attention value and perform an integer subtraction to identify a difference between the quantized value and the maximum value identified in the step **220.**

At step **240,** the analytics server may execute a bit shift operation, on the difference between the quantized value and the maximum value, corresponding to a power-of-two quantization scale to generate bit-shifted values. Next, the analytics server may convert each value to the reference scale (e.g., the difference calculated in the step **230)** by shifting the integer word rather than multiplying by a floating-point factor. The bit-shift operation may eliminate the costly floating-point multiply ordinarily required for de-quantization, while maintaining the computation entirely and integrity within the fixed-width integer data-path. In some embodiments, to allow for compatibility, the analytics server may select the power-of-two scale so that at least one centered score, after a right shift, is inside a predefined safe interval (e.g., -8 to 0) or any other defined range.

At step **250,** the analytics server may execute a base-2 exponentiation operation to the bit shifted values to generate base-2 exponentiated values. The analytics server may invoke a dedicated base-2 exponentiation protocol that converts each shifted value into its corresponding weight. For instance, the base-2 exponentiation operation may convert each bit-shifted, integer-domain score into its corresponding weight using a single hardware-native instruction (e.g., an exp2 intrinsic or fscale micro-op). In some embodiments, because the preceding quantization and centering steps bound every score to a small integer range aligned with a power-of-two scale, this conversion yields numerically precise softmax weights while incurring only a single-cycle latency per element.

At step **260,** the analytics server may aggregate the base-2 exponentiated values to generate an aggregated value. After converting each shifted value to its corresponding power-of-two weight, the analytics server may invoke a low-latency accumulator that iteratively (or in parallel) aggregates all of the base-2 exponentiated values generated. In some embodiments, because every weight remains within a fixed-point integer or narrow floating-point range guaranteed by the preceding quantization and exponentiation stages, the aggregation can be completed with a series of word-length-bounded add operations.

At step **270,** the analytics server may normalize the set of quantized values using the aggregated value. Once the scalar sum is available, the analytics server may perform a normalization protocol. In a non-limiting example, the base-2 exponentiated value may be divided by the aggregated value to yield a probability that sums to one across the set. Because both numerator and denominator reside in the same fixed-point domain established by the preceding integer pipeline, the division may be implemented either through an integer reciprocal computed via a single exp2/shift pair or through a short-word integer divide where supported by the hardware.

At step **280,** the analytic server may execute a model using the normalized value to output a navigational instruction to be executed by the ego. The analytics server may feed the softmax-normalized attention weights into the remainder of the transformer stack-first applying the weights to the corresponding value vectors to form a context embedding, then propagating that embedding through the model's subsequent layers-so as to generate an inference output that specifies a navigational instruction for the ego vehicle (e.g., a steering angle, lane-change command, or acceleration set-point). In some embodiments, the attention calculation, including the Base-2 Softmax normalization, can be executed in low-precision integer arithmetic, the downstream layers can consume the resulting probabilities without incurring format conversions, thereby sustaining the model's reduced-latency and reduced-power profile while delivering time-critical control directives suitable for on-board execution by the vehicle's motion-planning subsystem.

Though the embodiment discussed in relation to the method **200** includes a navigational decision, the method **200** is not limited to application in autonomous navigation or a specific type of navigational data. Therefore, the methods discussed herein can be applicable to all types of data.

In certain embodiments, the normalized attention weights produced by the optimized base-2 softmax are propagated through the downstream layers of the transformer to generate a fused vector (e.g., from successive camera frames), from which the model can compute a time-to-location (TTL) metric for each dynamically tracked object-such as an approaching vehicle, cyclist, or pedestrian-within the ego's field of view. When the model determines that the TTL for any object falls below a safety threshold, the analytics server generates a navigational instruction that commands an evasive steering adjustment, braking pulse, target velocity adjustments, a lane-change initiation, a longitudinal acceleration or deceleration set-point, or coordinated combination thereof, thereby enabling the ego to mitigate or avoid an imminent contact while maintaining the low-power, edge-deployable profile afforded by the disclosed attention-computation technique.

As used herein, time-to-location or time-to-contact indicate an estimated time for an ego to reach a location (whether the location is a designated or defined location or whether the location indicates an object, such as a wall or another ego).

As used herein, the model may include any computer model including artificial intelligence models, whether using transformers or not. Additionally or alternatively, the model may not be classified as an artificial-intelligence or machine learning model.

In some embodiments, the analytics server can provide (e.g., method **200)** a hardware-optimized softmax sequence that minimizes floating-point operations and instead leverages power-of-two scaling and efficient integer-domain arithmetic. The proposed sequence may be implemented as follows:

### First Pass (Integer Maximum Determination)

A maximum value is determined from the quantized accumulator values using integer operations.

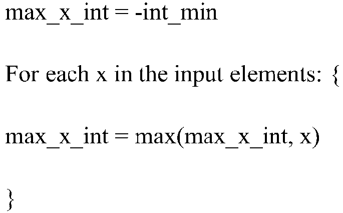

### Second Pass (Exponentiation Preparation and Accumulation):

Each input is shifted and exponentiated using a hardware-efficient base-2 function. The values are scaled using bit shifts derived from the logarithmic quantization scales of the query and key projections.

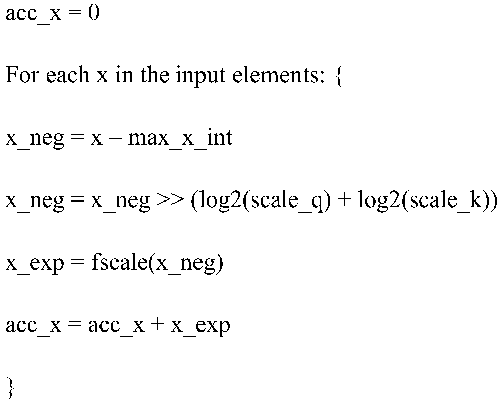

### Third Pass (Normalization and Output Computation)

Each exponentiated value is normalized by the reciprocal of the accumulated sum and stored as the final softmax output.

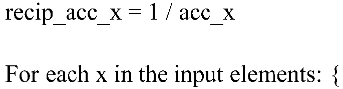

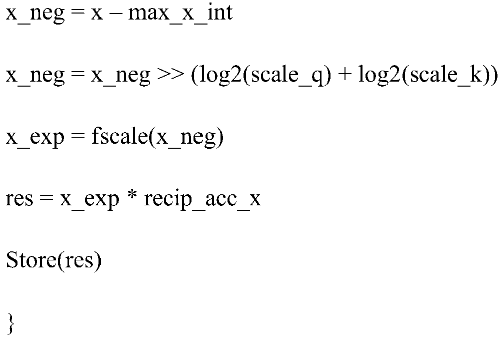

This optimized approach avoids dequantization and floating-point multiplication by using power-of-two quantization scales. The shift operation used to scale the values is natively supported and hardware-accelerated on common processor architectures, including ARM and x86 platforms.

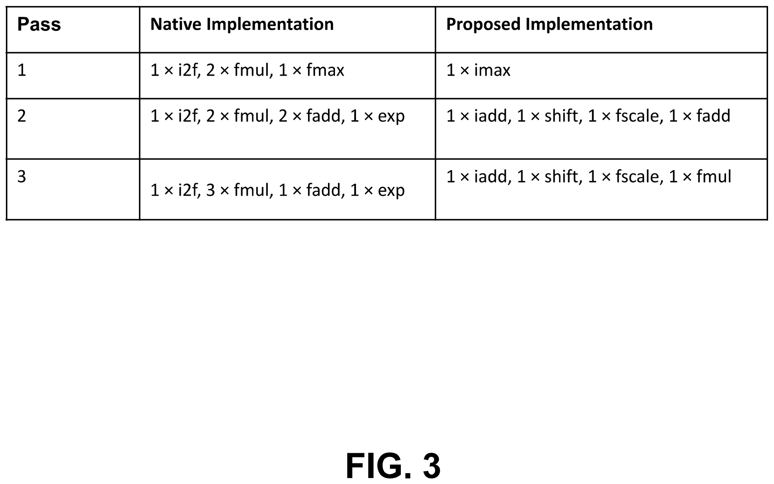

A comparative analysis of the instruction-level operation count between the conventional ("native") implementation and the proposed hardware-friendly implementation highlights the efficiency benefits. The table below illustrates the operations used in each softmax pass depicted in **FIG. 3****.**

As depicted, the proposed method reduces the number of floating-point operations by replacing multiplications and exponentiation with integer additions, shifts, and a hardware-optimized fscale operation that computes base-2 exponentiation. This results in a highly efficient implementation of softmax that is well-suited for low-power, real-time inference on embedded and edge devices. Furthermore, because the technique uses quantization scales constrained to powers of two, it simplifies dequantization and improves compatibility with fixed-point processing pipelines. This fused attention kernel thereby achieves the same probabilistic normalization as conventional softmax while providing a substantial reduction in computational overhead-making it particularly advantageous for deployment in resource-constrained environments where transformer models are increasingly used.

The methods and systems described herein allow for a practically feasible execution of transformer models on edge devices embedded within egos (e.g., autonomous vehicles and robots). Using the methods and systems discussed herein, performance bottlenecks in attention computation can be reduced (or sometimes eliminated), aligning model execution with hardware capabilities and supporting real-time autonomous navigation in constrained environments.

In one embodiment, the methods and systems described herein (e.g., optimized base-2 softmax technique) may be implemented within an autonomous navigation system operating on a self-driving vehicle. The autonomous navigation system may include a transformer-based neural network model configured to process real-time sensor inputs, such as multi-view camera images, GPS data, and/or high-definition maps. The model may be designed to perform multi-modal perception tasks including lane detection, obstacle recognition, and dynamic object tracking. As part of its attention mechanism, the model may perform matrix multiplications between quantized query and key tensors, followed by a softmax operation to normalize attention weights. The autonomous navigation system runs inference on an embedded processor within the vehicle, such as an automotive-grade ARM-based system-on-chip (SoC) or low-power GPU accelerator, where floating-point resources are limited, and efficiency is critical for maintaining real-time responsiveness.

To optimize inference performance, the softmax operation is replaced with the disclosed hardware-efficient attention mechanism. Instead of using floating-point exponentiation and arbitrary scaling, the model employs power-of-two quantization for the query and key projections, enabling dequantization via integer bit shifts. The exponentiation step is computed using a hardware-accelerated base-2 function, such as an fscale instruction, thereby eliminating the need for floating-point exp(x) calls.

This implementation reduces computational load, memory bandwidth, and latency, enabling the transformer model to process high-dimensional sensor data within real-time operational constraints. As a result, the autonomous vehicle is able to make timely and accurate decisions for safe navigation, even in complex and dynamic environments such as urban intersections, highway merges, and pedestrian-heavy zones.

In a non-limiting example, the analytics server may retrieve a vector of quantized values and power-of-two quantization scales that consist of five quantized integer values: x = [3, 7, 5, 2, 6]. The quantization scales for the query and key projections can be set to 2, such that scale_q = 2 and scale_k = 2. Because the scaling factors are powers of two, their logarithms base 2 can be computed efficiently as integers. In this case, log2(scale_q) + log2(scale_k) = log2(2) + log2(2) = 1 + 1 = 2, which means that dequantization can be implemented as a simple right shift by 2 bits-equivalent to dividing the values by 4 in hardware.

In the first pass of the softmax algorithm, the analytics server determines the maximum value of the quantized input vector using integer arithmetic. This value serves as a reference to stabilize the subsequent exponentiation step and prevent numerical overflow or underflow. Among the input values [3, 7, 5, 2, 6], the maximum is 7 (max_x_int = 7).

During the second pass, the method computes the exponentiated values using base-2 exponentiation. Each input value is first subtracted from the maximum value to produce a centered value, which is then right shifted by 2 bits. The computed steps for each element are as follows:

For x = 3, the difference from the max is -4, which right-shifts to -1, yielding 2^(-1) = 0.5.

For x = 7, the difference is 0, shift remains 0, so 2^0 = 1.0.

For x = 5, the difference is -2, which shifts to -1, yielding 0.5.

For x = 2, the difference is -5, which shifts to -2, yielding 2^(-2) = 0.25.

For x = 6, the difference is -1, which shifts to -1, yielding 0.5.

The accumulated sum of these exponentiated values is 0.5 + 1.0 + 0.5 + 0.25 + 0.5 = 2.75. This value will serve as the normalization factor in the final pass.

In the third pass, each of the exponentiated values is divided by the accumulated sum of 2.75 to yield normalized probabilities that sum to 1. The final normalized values are:
For x = 3: 0.5 / 2.75 ≈ 0.1818
For x = 7: 1.0 / 2.75 ≈ 0.3636
For x = 5: 0.5 / 2.75 ≈ 0.1818
For x = 2: 0.25 / 2.75 ≈ 0.0909
For x = 6: 0.5 / 2.75 ≈ 0.1818

Thus, the final softmax-like output vector is approximately [0.1818, 0.3636, 0.1818, 0.0909, 0.1818].

This example illustrates how the proposed base-2 quant softmax produces normalized attention weights similar to the traditional softmax function, but through the use of hardware-friendly operations such as integer subtraction, bitwise shifts, and power-of-two exponentiation. By eliminating floating-point multiplication and expensive exponential functions, this approach improves the computational efficiency.

In another non-limiting example, the methods and systems discussed herein can be used to autonomously navigate an ego. In an example, an ego approaches a complex four-way intersection in which pedestrians, bicyclists, and cross-traffic must all be tracked in real time. A transformer-based perception-and-planning stack running on the ego's processor ingests eight synchronized camera streams, tokenizes each frame into spatial patches, and feeds the resulting int8 query, key, and value tensors into its multi-head attention module. Leveraging the optimized base-2 softmax disclosed herein, the attention layer performs the Q · K integer matrix multiplication, identifies the maximum logit, applies power-of-two bit-shifts and a single base-2 exponentiation to obtain normalized attention weights, and produces context embeddings without resorting to floating-point exponentials or multiplications. Because the entire softmax computation executes using the methods discussed herein, the model can ingest the data faster (and uses less computing power) than the conventional implementations. As a result, the downstream motion-planning network receives normalized attention outputs faster. The reduced compute load allows the processor to dedicate more energy headroom to navigational decisions, enabling the ego to accurately predict that a cyclist will enter its lane from the right and to issue a pre-emptive deceleration and steering adjustment that yields a safe, comfortable merge through the intersection.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, attributes, or memory contents. Information, arguments, attributes, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-Ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A method of navigating an ego via ingesting sensor data, the method comprising:
receiving, by one or more processors, a set of quantized values resulting from a matrix multiplication of quantized query and key vectors in an attention layer of a transformer model, the set of quantized values corresponding to sensor data associated with the ego;
identifying, by the one or more processors, from the set of quantized values, a maximum value using an integer comparison operation;
for at least one quantized value in the set of quantized values, computing, by the one or more processors, a difference between the quantized value and the maximum value;
executing, by the one or more processors, a bit shift operation, on the difference between the quantized value and the maximum value, corresponding to a power-of-two quantization scale to generate bit-shifted values;
executing, by the one or more processors, a base-2 exponentiation operation to the bit shifted values to generate base-2 exponentiated values;
aggregating, by the one or more processors, the base-2 exponentiated values to generate an aggregated value; and
executing, by the one or more processors, a model using the aggregated value to output a navigational instruction to be executed by the ego.

2. The method of claim 1, wherein executing the model further comprises estimating, by the one or more processors, a time-to-location for at least one dynamic object detected in camera imagery associated with the ego, and the navigational instruction directs an evasive steering or braking maneuver when the estimated time-to-location satisfies a threshold.

3. The method of claim 1 or 2, wherein the power-of-two quantization scale is chosen so that at least one bit-shifted value falls within a defined range.

4. The method of one of the preceding claims, wherein the navigational instruction comprises an ego control command comprising at least one of a steering-angle adjustment, a lane-change initiation, a longitudinal acceleration or deceleration, and a target velocity set-point.

5. The method of one of the preceding claims, wherein the sensor data corresponds to two-dimensional image data captured by at least one camera associated with the ego.

6. The method of one of the preceding claims, further comprising:
normalizing, by the one or more processors, the set of quantized values using the aggregated value; and
executing, by the one or more processors, a model using the aggregated normalized value to output a navigational instruction to be executed by the ego.

7. The method of one of the preceding claims, wherein normalizing comprises dividing each of the base-2 exponentiated values by the aggregated value to produce a probability distribution over the set of quantized values.

8. A computer system for navigating an ego via ingesting sensor data, the computer system comprising a computer readable medium having a set of non-transitory instructions, that when executed by at least one processor, cause the at least one processor to perform the method of one of the preceding claims

9. A computer system for navigating an ego via ingesting sensor data, the computer system comprising at least one processor configured to perform the method of claims 1 to 7.
